# EUROPÄISCHE PATENTANMELDUNG

(11) **EP 0 933 190 A1**
(43) Veröffentlichungstag der Anmeldung: **04.08.1999**
(21) Anmeldenummer: 99101625.4
(22) Anmeldetag: 03.02.1999
(51) Int. Cl.: B29C 65/08, B01D 63/08, B01D 29/05, B01D 29/01

(54) **Verfahren und Vorrichtung zur Integration eines Bauelementes zwischen einem Unter- und Oberteil mittels Ultraschallschweissung sowie diesbezügliche Baugruppe**

(30) Priorität: 03.02.1998 DE 19804087
(71) Anmelder: WILDEN Engineering- und Vertriebsgesellschaft mbH, 92507 Nabburg (DE)
(72) Erfinder: Kaspers, Norbert, 92253 Schnaitenbach (DE)
(74) Vertreter: Schmidt, Horst, Dr.

(57) **Zusammenfassung**

Ein Verfahren zur Integration eines Bauelementes zwischen einem Unterteil und einem Oberteil mittels Ultraschallschweissung, wobei wenigstens das Unter- und Oberteil aus schweissbarem Kunststoffmaterial bestehen, umfasst das Aufsetzen des Oberteils (4) auf das auf dem Unterteil (3) abgestützte Bauelement (5) und das Einwirken von Ultraschall-Schweissenergie zwischen Ober- und Unterteil zur Schaffung einer Schweissverbindung zwischen Ober- und Unterteil. Das Bauelement (5) wird wenigstens während des Schweissens unter einer äusseren Klemmkraft zwischen Ober- und Unterteil (3,4) eingespannt gehalten, so dass keine Lageverschiebungen während des Schweissens auftreten. Die Schweissenergie wird nur längs einer ringförmigen, benachbarte Bereiche (11,14) von Ober- und Unterteil überdeckenden Schweisszone eingebracht. Bei dem zu integrierenden Baulement kann es sich um ein Filterelement, elektronische Bauteil oder dgl. handeln.

## Beschreibung

Die Erfindung betrifft ein Verfahren zur Integration eines Bauelementes zwischen einem Unterteil und einem Oberteil mittels Ultraschallschweissung gemäss dem Oberbegriff des Patentanspruchs 1. Sie betrifft ferner eine Vorrichtung zur Durchführung des Verfahren sowie eine nach dem Verfahren hergestellte Baugruppe.

Die Erfindung bezieht sich insbesondere, jedoch nicht ausschliesslich, auf die Bereitstellung einer integrierten Filterbaugruppe, bestehend aus einem Filtergehäuse und einem Filterdeckel, beide aus einem schweissbaren Kunststoffmaterial, mit einem dazwischen angeordneten Filterelement. Für die permanente, hermetisch abdichtende Verbindung von derartigen Kunststoffbauteilen kommt bevorzugt wegen seiner Wirtschaftlichkeit das Schweissen mittels Ultraschallenergie zur Anwendung, indem diese zwischen den zu verschweissenden Bauteilen einwirken gelassen wird, um angrenzende Bereiche der Bauteile aufzuschmelzen und dadurch integral miteinander zu verbinden. Bei einer bekannten nach dieser Vorgehensweise gefertigten Filterbaugruppe (DE-U-8435227, FR-A-2573984) wurde festgestellt, dass die beim Schweissen auftretenden Schwingungen leicht Lageverschiebungen am Filterelement hervorrufen können, indem das Filtergehäuse und/oder der Filterdeckel unter den

Schwingungen Relativbewegungen vornehmen, die sich auf die Lage des anfänglich nur lose positionierten Filterelementes entsprechend auswirken, Auch wird häufig Schweissenergie in unerwünschter Weise in das Filterelement selbst eingebracht, was zu lokalen Beschädigungen des Filterelementes führen kann. Diese Schwingungen können ausserdem das Filterelement während des Schweissens stossartig belasten und von dieser Seite her Beschädigungen hervorrufen. Ähnliche Probleme entstehen, wenn statt eines Filterelementes andere Bauelemente, z.B. Membranen vorgesehen werden sollen.

Aufgabe der Erfindung ist es, ein Verfahren und eine Vorrichtung der eingangs erwähnten Gattung schaffen, die die wirtschaftliche Herstellung einer integrierten Baugruppe unter weitestgehender Vermeidung von Auswirkungen des Ultraschall-Energieeintrags auf das zu integrierende Funktionsbauelement ermöglichen.

Diese Aufgabe wird erfindungsgemäss durch die Merkmale der Patentansprüche 1 und 7 gelöst. Das Verfahren sieht vor, dass das zu integrierende Bauelement wenigstens während des Schweissens unter einer äusseren vorbestimmbaren Klemmkraft zwischen Ober- und Unterteil eingespannt gehalten wird. Das Bauelement wird dadurch in seiner gewünschten Position zwangsmässig fixiert, so dass es unter den beim Ultraschallschweissen auftretenden Schwingungen keine schädigenden Lageverschiebungen erfährt. Ein weiterer an sich bekannter Gesichtspunkt der Erfindung ist, dass die Schweissenergie längs einer ringförmigen, benachbarte Bereiche von Ober- und Unterteil überdeckenden Schweisszone eingebrachten wird, die in einem ausreichenden Abstand zum zu integrierenden Bauelement steht, wodurch thermische Auswirkungen auf das Baulelement ausgeschaltet oder minimiert werden. Die während des Schweissvorganges exakt eingehaltene Position des Bauelementes ermöglicht die Integration von Bauelementen unterschiedlichster Art, wie empfindliche Filtergewebe, Membranen, empfindliche elektronische Bauelemente etc. Gemäss einer Weiterbildung der Erfindung kann ferner vorgesehen werden, dass ein aussenumfänglicher Bereich des Bauelementes im Zuge einer axialen Bewegung des Oberteils um eine Kante des Unterteils umgebogen wird, bevor die Klemmkraft zur Einwirkung kommt. Diese Massnahme unterstützt nicht nur die Positionierung des Bauelementes, sondern verleiht diesem zugleich eine bestimmte, bei gewissen Anwendungen erwünschte Konfiguration. Die zur Durchführung des Verfahren vorgeschlagene Vorrichtung kann mit vergleichsweise geringem baulichen Aufwand realisiert werden, was in Verbindung mit einer geringeren Rate an fehlerhaften Produkten minimierte Herstellungskosten bei gleichzeitiger Produktverbesserung bedeutet.

Die Erfindung wird nachfolgend anhand einer Ausführungsform und der Zeichnung näher erläutert. Es zeigen:
Fig. 1 in teilweise geschnittener, schematischer Ansicht einer aus Ober- und Unterteil und einem dazwischen angeordneten Filterelement bestehenden Baugruppe sowie eine Sonotrode und ein Niederhalteelement einer Schweissvorrichtung in den Ausgangsstellungen,
Fig. 2 in einer Ansicht ähnlich Fig. 1 die Baugruppe sowie die Sonotrode und das Niederhalteelement in einer Stellung unmittelbar vor Anlegen der Schweissenergie, und
Fig. 3 in längsgeschnittener Ansicht die Baugruppe im fertig geschweissten Zustand.

Die Erfindung wird nachfolgend in Verbindung mit der Herstellung einer Baugruppe beschrieben, die als Funktionselement ein Filterelement enthält. Die Erfindung ist jedoch auf dieses Anwendungsgebiet nicht beschränkt, sondern kann immer dann erfolgreich zum Einsatz kommen, wenn es gilt, ein Funktionsbauelement zwischen einem Unter- und Oberteil permanent durch Ultraschallschweissung zu fixieren.

Die nachfolgend verwendeten Ausdrücke "oben" und "unten" beziehen sich auf die in der Zeichnung gezeigte Lage der Teile.

In der Zeichnung trägt die Filterbaugruppe das allgemeine Bezugszeichen 1 und eine Anordnung aus einer Schweisssonotrode und einem Niederhalteelement das allgemeine Bezugszeichen 2. Die Filterbaugruppe 1 umfasst ein Unterteil oder Filtergehäuse 3, ein Oberteil oder einen Filterdeckel 4 und ein dazwischen angeordnetes Filterelement 5, z.B. in Gestalt eines Filtergewebes. Wenigstens das Filtergehäuse 3 und der Filterdeckel 4 bestehen aus mittels Ultraschallenergie miteinander verschweissbaren geeigneten Kunststoffmaterialen, wie Polystyrol, Polypropylen, Kunststoffmaterialien auf Acrylbasis und dgl. Das Filtergehäuse 3 hat einen im wesentlichen napfförmigen Querschnitt, der eine Ausnehmung 6 definiert, in der das Filterelement 5 aufgenommen werden kann.

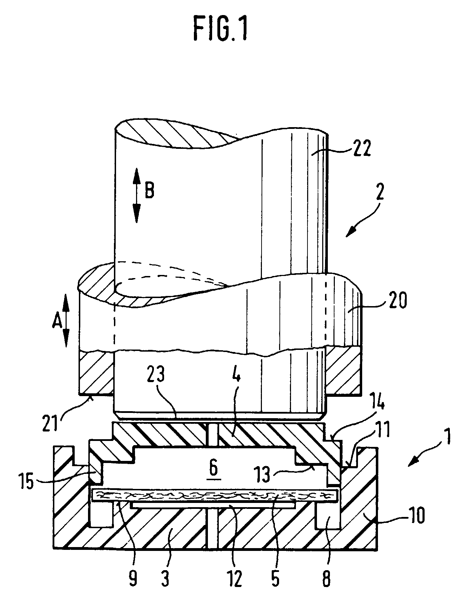

Das Filterelement 5 kann im Ausgangszustand eine scheibenförmige Konfiguration haben und liegt auf einer ringförmigen, vom Boden der Ausnehmung nach oben weisenden Stützfläche 9 des Filtergehäuses 3 auf. Die ringförmige Stützfläche 9 befindet sich in einem geeigneten radialen Abstand vom inneren Umfang der Ausnehmung 6 und in einem geeigneten axialen Abstand von deren Bodenseite, so dass die Stützfläche 9 aussenumfänglich von einem ringnutförmigen Ausnehmungsbereich 8 umgeben ist. Das Filterelement 5 überragt in der in Fig. 1 gezeigten Ausgangsposition der Teile den ringnutförmigen Ausnehmungsbereich 8.

Das dem Filterdeckel 4 zugewandte freie obere Stirnende der Umfangswand 10 des Filtergehäuses 3 ist unter Bildung einer ringförmigen, nach oben weisenden Schulterfläche 11 abgestuft, die in einer radialen oder annähernd radialen Ebene liegt und zusammen mit einer Schulterfläche 14 am Filterdeckel 4 eine Schweisszone definiert, worauf nachfolgend noch näher eingegangen wird.

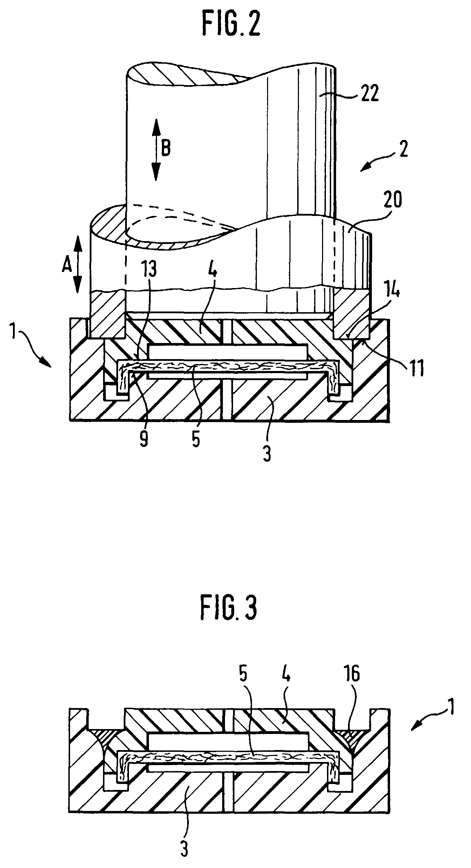

Der Filterdeckel 4 ist in seinen Abmessungen an die Abmessungen der Ausnehmung 6 des Filtergehäuses 3 angepasst, so dass der Filterdeckel 4 in der Ausnehmung 6 wenigstens teilweise nach Art einer Kolben/Zylinderanordnung aufgenommen werden kann. Eine in Richtung auf das Filtergehäuse 3 weisende untere ringförmige Schulterfläche 13 ist am Filterdeckel 4 vorgesehen, die mit der Stützfläche 9 des Filtergehäuses 3 zusammenwirken kann, um zwischen sich das Filterelement 5 einzuklemmen, wie dies in Fig. 2 gezeigt ist. Aussenumfänglich der Schulterfläche 13 steht ein Ringflansch 15 nach unten ab.

Ferner weist der Filterdeckel 4 die vorerwähnte nach oben weisende Schulterfläche 14 auf, die in eine ausgerichtete Beziehung zur Schulterfläche 11 des Filtergehäuses 3 gebracht werden kann, so dass beide Schulterflächen 11, 14 in einer gemeinsamen radialen oder annähernd radialen Ebene zu liegen kommen. Die ringförmige Stützfläche 9 des Filtergehäuses 3 umgrenzt einen Raum 12, der nach oben durch das Filterelement 4 abgedeckt ist und das Filtrat aufnehmen kann.

Eine ringförmige Rohrsonotrode 20 ist Teil einer Ultraschallschweissvorrichtung (nicht gezeigt) und hat eine untere Stirnfläche 21 mit einer radialen Abmessung, die kleiner oder gleich der der radialen Abmessung der zusammengesetzten Schulterflächen 11, 14 des Filtergehäuses 3 bzw. Filterdeckels 4 ist und zu diesen Schulterflächen 11, 14 axial ausgerichtet liegt. Die Sonotrode 20 dient zum Anlegen einer Ultraschall-Schweissenergie an angrenzende Bereiche der Schulterflächen 11, 14. Die Sonotrode 20 ist, wie durch den Pfeil A in der Zeichnung angedeutet ist, in axialer Richtung auf- und abbewegbar. Der grundsätzliche übrige Aufbau einer Ultraschall-Schweissvorrichtung ist dem Fachmann bekannt, so dass sich eine diesbezügliche nähere Erläuterung erübrigt.

Ein Niederhalteelement 22 in Gestalt eines Stempels ist in der Sonotrode 20 axial beweglich aufgenommen und kann unabhängig von der Sonotrode 20 in axialen Richtungen bewegt werden, wie dies durch den Pfeil B in der Zeichnung angedeutet ist. Das Niederhalteelement 22 hat eine untere Stirnfläche 23, die mit der Oberseite des Filterdeckels 4 in Eingriff treten kann, um auf den Filterdeckel 4 eine axiale Kraft auszuüben, um den Filterdeckel 4 gegen das Filterelement 5 zu bewegen. Eine Kraftbeaufschlagungseinrichtung (nicht gezeigt) ist vorgesehen, um das Niederhalteelement 22 mit einer Axialkraft zu beaufschlagen. Bei der Kraftbeaufschlagungseinrichtung kann es sich um eine Kolben/Zylindereinrichtung handeln. Wenn erwünscht, könnte auch eine Federeinrichtung zu diesem Zweck vorgesehen sein, die bewirkt, dass zwischen der Sonotrode 20 und dem Niederhalteelement 22 eine Relativbewegung gegen eine Federvorspannkraft stattfinden kann, sobald das Niederhalteelement 22 mit dem Filterdeckel 4 in Berührung gekommen ist.

Die Funktionsweise der vorbeschriebenen Vorrichtung ist wie folgt.

Nach Vormontage der Aufbauteile der Baugruppe 1, wie sie in Fig. 1 gezeigt ist, wonach das Filterelement 5 mit seiner Unterseite auf der Stützfläche 9 des Filtergehäuses 3 lose aufliegt und der Filterdeckel 4 lose in der Ausnehmung 6 des Filtergehäuses 3 aufgenommen ist, wobei sich die Stirnfläche des Ringflansches 15 auf der Oberseite des Filterelementes 5 abstützen kann, wird das Niederhalteelement 22 in Berührung mit der Oberseite des Filterdeckels 4 gebracht und dadurch anschliessend mit einer axialen Kraft beaufschlagt. Die axiale Kraft bewirkt eine weitere Bewegung des Niederhalteelementes 22 und damit des Filterdeckels 4 in Richtung auf das Filterelement 5 von der in Fig. 1 gezeigten Position in die Position nach Fig. 2, wobei im Zuge dieser Bewegung der Ringflansch 15 des Filterdeckels 4 einen äusseren Umfangsbereich des Filterelementes 5 um die Aussenkante der Stützfläche 9 des Filtergehäuses 3 umbiegt, so dass das Filterelement 5 in eine in Fig. 2 gezeigte U-förmige Querschnittskonfiguration umgeformt wird.

Bei der weiteren Bewegung des Filterdeckels 4 kommt schliesslich dessen Schulterfläche 13 in Berührung mit der Oberseite des Filterelementes 4, so dass dieses zwischen der Schulterfläche 13 und der Stützfläche 9 des Filtergehäuses 3 fest eingeklemmt wird, wie dies in Fig. 2 gezeigt ist.

Ferner gelangt im Zuge dieser Bewegung die nach oben weisende Schulterfläche 14 des Filterdeckels 4 in eine radial ausgerichtete Beziehung zur Schulterfläche 11 des Filtergehäuses 3, so dass beide Schulterflächen 11, 14 eine ringförmige Zone bilden, mit der die Stirnfläche 21 der Sonotrode 20 in Berührung gebracht werden kann, wenn die Sonotrode 20 axial relativ zum Niederhalteelement 22 gegen die Baugruppe 1 bewegt wird. In dieser in Fig. 2 gezeigten Schweisstellung wird unter fortgesetzter Einwirkung der Klemmkraft seitens des Niederhalteelementes 22 über die Sonotrode 20 Ultraschallweissenergie auf einen ringförmigen, aus den ausgerichteten Schulterflächen 11, 14 des Filterdeckels 4 bzw. Filtergehäuses 3 sich zusammensetzenden begrenzten Bereich von Filtergehäuse 3 und Filterdeckel 4 einwirken gelassen, um das Kunststoffmaterial nahe diesem Bereich zum Schmelzen zu bringen und dadurch ein Verschweissen im Bereich der Schulterflächen 11, 14 zu bewirken, wie dies in Fig. 3 bei 16 angedeutet ist.

Beim Schweissvorgang wird das empfindliche Filterelement 5 ausser durch die Niederhaltekraft keiner anderen Beanspruchung ausgesetzt. Insbesondere verhindert die Niederhaltekraft, dass zwischen dem Filterelement 5 und dem Filterdeckel 4 bzw. Filtergehäuse 3 während des Schweissvorganges Relativbewegungen auftreten können. Ausserdem kann der Schweissvorgang in einem solchen Abstand vom Filterelement 5 erfolgen, dass die Schweissenergie wirksam davon ferngehalten wird.

Nach erfolgter Schweissung wird die Schweisstelle erkalten gelassen und die Sonotrode 20 zusammen mit dem Niederhalteelement 22 wieder zurückgezogen. Das erhaltene und in Fig. 3 gezeigte Ergebnis des Schweissvorganges ist eine Filterbaugruppe mit hermetisch nach aussen und gegeneinander abgedichteten Filterkammern und einer Schweissnaht 16 längs einer ringförmigen Zone, die Bereiche des Filterdeckels 4 und Filtergehäuses 3 überdeckt.

Der Ringflansch 15 am Filterdeckel 4 und der nutförmige Ausnehmungsbereich 8 am Filtergehäuse 3 sind nicht obligatorisch, so dass diese auch weggelassen werden könnten, wenn die Filterbaugruppe ein scheibenförmiges Filterelement enthalten soll. Anstelle einer teleskopartigen Anordnung der ringförmigen Sonotrode 20 und des Niederhalteelementes 22 könnte letzteres auch angeordnet sein, um seitens des Filtergehäuses 3 die Baugruppe mit einer Axialkraft zu beaufschlagen. Ferner versteht es sich, dass der Begriff "ringförmig", wie er vorausgehend verwendet wurde, andere Konfigurationen als kreisförmige, z.B. rechteck- oder quadratförmige oder sonstige Formen einschliesst. Eine Steuereinrichtung (nicht gezeigt) zur Steuerung der Kraftbeaufschlagungseinrichtung für das Niederhalteelement 22 kann so ausgelegt sein, dass die Niederhaltekraft mit unterschiedlicher Höhe während des Schweissvorganges einwirken kann. Ferner kann mit dem Ausüben der Niederhaltekraft zu einem geeigneten Zeitpunkt vor oder mit dem Beginn des Schweissvorganges begonnen werden.

## Patentansprüche

1. Verfahren zur Integration eines Bauelementes zwischen einem Unterteil und einem Oberteil mittels Ultraschallschweissung, wobei wenigstens das Unter- und Oberteil aus schweissbarem Kunststoffmaterial bestehen, bei dem nach Aufsetzen des Oberteils auf das auf dem Unterteil abgestützte Bauelement Ultraschall-Schweissenergie zwischen Ober- und Unterteil zur Schaffung einer Schweissverbindung zwischen diesen Teilen einwirken gelassen wird, wobei die Schweissenergie längs einer ringförmigen, benachbarte Bereiche von Ober- und Unterteil überdeckenden Schweisszone ausserhalb der Abmessungen des Bauelementes eingebracht wird.dadurch gekennzeichnet, dass das Bauelement wenigstens während des Schweissens unter einer äusseren Klemmkraft zwischen Ober- und Unterteil eingespannt gehalten wird,

2. Verfahren nach Anspruch 1, dadurch gekennzeichnet, dass das Oberteil unter der Klemmkraft gegen das Bauelement gedrückt wird.

3. Verfahren nach Anspruch 1 oder 2, dadurch gekennzeichnet, dass die Klemmkraft wenigstens bis zu einer eine Bewegung des Bauelementes während des Schweissens verhindernden Höhe aufgebracht wird.

4. Verfahren nach einem der vorhergehenden Ansprüche, dadurch gekennzeichnet, dass mit dem Aufbringen der Klemmkraft vor Beginn des Schweissens begonnen wird.

5. Verfahren nach einem der vorhergehenden Ansprüche, dadurch gekennzeichnet, dass ein aussenumfänglicher Bereich des Bauelementes im Zuge der Bewegung des Oberteiles auf das Bauelement um eine Kante des Unterteils umgebogen wird.

6. Verfahren nach einem der vorhergehenden Ansprüche, dadurch gekennzeichnet, dass das Bauelement ein Filtermaterial umfasst.

7. Vorrichtung zur Durchführung des Verfahrens nach einem der vorhergehenden Ansprüche, mit einer relativ zum Unterteil zwischen einer zurückgezogenen Position und einer Schweissposition bewegbaren Sonotrodeneinrichtung, dadurch gekennzeichnet, dass die Sonotrodeneinrichtung (20) eine ringförmige, die Schweisszone im wesentlichen definierende Konfiguration hat, und dass ein zwischen einer zurückgezogenen und vorgeschobenen Position bewegbares, mit einer Kraftbeaufschlagungseinrichtung verknüpftes, mit dem Ober- und/oder Unterteil (3,4) in Eingriff bringbares Niederhalteelement (22) zum Ausüben der Klemmkraft vorgesehen ist.

8. Vorrichtung nach Anspruch 7, dadurch gekennzeichnet, dass die Kraftbeaufschlagungseinrichtung eine Federeinrichtung umfasst.

9. Vorrichtung nach Anspruch 7, dadurch gekennzeichnet, dass die Kraftbeaufschlagungseinrichtung eine Kolben/Zylindereinrichtung umfasst.

10. Baugruppe, hergestellt nach einem der Ansprüche 1 bis 6, bestehend aus einem Unterteil (3) und einem Oberteil (4), jeweils aus einem Kunststoffmaterial, mit einem dazwischen eingespannten Bauelement (5), wobei das Oberteil längs einer ringförmigen Schweisszone (16) mit dem Unterteil verschweisst ist.

11. Baugruppe nach Anspruch 10, dadurch gekennzeichnet, dass das Bauelement ein Filtermaterial umfasst.
